# EUROPEAN PATENT APPLICATION

(11) **EP 2 151 746 A2**
(43) Date of publication of application: **10.02.2010**
(21) Application number: 09161681.3
(22) Date of filing: 02.06.2009
(51) Int. Cl.: G06F 3/048

(54) **Portable terminal and method for displaying information using the same**

(30) Priority: 31.07.2008 KR 20080074914
(71) Applicant: LG Electronics Inc., Seoul 150-721 (KR)
(72) Inventor: Kim, In Hwan, 153-801, Seoul (KR)
(74) Representative: Cabinet Plasseraud

(57) **Abstract**

Disclosed are a portable terminal and a method for displaying information in thereof. The portable terminal comprises an input display part which has a pointing device for inputting user's instruction by a pointing operation of a user during a broadcast mode; a communication part which forms a communication channel to an external provider server; and a control part which transmits time information when the user performs the pointing operation and coordinate information on a position pointed by the user to the external provider server if the user's instruction are inputted, and receives information on a pointed object from the external provider server, and then provides the information to the user. The portable terminal can input the user's instruction through the pointing device and provide information corresponding to the user's instruction from the provider server.

## Description

### CROSS-REFERENCE TO RELATED APPLICATION

The present application is based on, and claims priority from, Korean Application Number 10-2008-0074914 filed July 31, 2008, the disclosure of which is incorporated herein by reference in its entirety.

### BACKGROUND

The following description relates generally to a portable terminal and a method for displaying information using the same, and particularly, to a portable terminal which displays information relevant to user's selected input on a screen, and a method for displaying information using the same.

Generally, a portable terminal is a portable gadget having one or more functions of voice and image communication, inputting/outputting information, and storing data.

As the portable terminal has various functions, it has been changed into a multimedia player having complicated functions of, for example, taking a picture or a moving picture, reproducing a music file or a moving picture file, playing a game, receiving a broadcast and the like.

Recently, in digital broadcasting, an interactive broadcasting service function is widely used to provide "selected contents at a selected time by a viewer". By using the interactive broadcasting service function, the viewer can directly participate in a quiz show, take part in a survey, cast a vote, enjoy a home shopping service, use a home banking service or an e-mail service and so on.

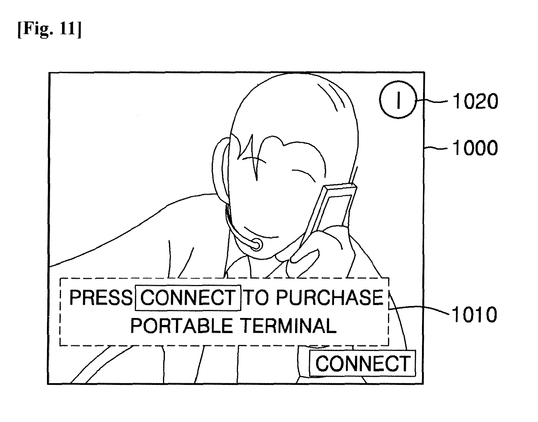

FIG. 11 is a schematic view illustrating a conventional portable terminal 1000 in which the interactive broadcasting service function is displayed on a screen.

Referring to FIG. 11, while a broadcast program of a drama is reproduced through a screen of the portable terminal 1000, if the interactive broadcasting service function 1010 of purchasing goods is contained in the broadcast program, an icon 1020 informing a user that there is the interactive broadcasting service function 1010 is displayed on the screen. The user can select the icon 1020 and receive information on the goods reproduced in the broadcast program.

However, there is a problem that information can be restrictively provided through the portable terminal only when the interactive broadcasting service function is contained in the broadcast program.

There is another problem that a method of directly inputting necessary information by the user is very restrictive.

There is still another problem that, since information provided through the portable terminal by a service provider is commonly provided to all the users, it is impossible to provide information requested only by a specific user.

### SUMMARY

The instant disclosure is to provide a portable terminal in which a user can input instruction through a pointing device and receive detailed information corresponding to the user's instruction from a server of a service provider, and a method for displaying information using the same.

In one general aspect, a portable terminal of the present invention comprises: an input display part which has a pointing device for inputting user's instruction by a pointing operation of a user during a broadcast mode; a communication part which forms a communication channel to an external provider server; and a control part which transmits time information when the user performs the pointing operation and coordinate information on a position pointed by the user to the external provider server if the user's instruction is inputted, and receives information on a pointed object from the external provider server, and then provides the information to the user.

Therefore, the user may specify a desired object by directly pointing it on the pointing device. And the portable terminal can receive information on the object pointed by the user from the external provider server and then provide the information to the user, thereby providing in detail the information requested by a particular user.

Further, the control part activates the input display part when the user points an activation icon displayed on the input display part of the portable terminal, which is deactivated with respect to a pointing input operation of the user, and deactivates the input display part when the user points the activation icon on the activated input display part.

The pointing device may be activated by pointing the activation icon displayed on the input display part. Thus, since the pointing device is activated only when the user points the activation icon, the power consumption of the portable terminal can be reduced. Further, in order to reduce the power consumption in the portable terminal and prevent an undesired function from being performed by erroneous pointing, the pointing device can be deactivated again.

Further, the control part transmits to the external provider server reproduction time from a point of time when a first broadcast is started to a point of time when the user performs the pointing operation, coordinate information on a position designated by the user and information on a kind of interactive function selected by the user.

As the user selects by adding the interactive function, information on broadcasting time and coordinate information designated by the user are requested by adding information on the kind of interactive function. Thus, there is an advantage in that the external provider server can recognize an object designated by the user, whereby the information corresponding to the user's instruction can be clearly provided.

Further, the control part displays detailed information on the kind of interactive function by allowing a user to point a user's instruction on the input display part activated by pointing of the portable terminal.

There is another advantage in that the user can firsthand specify various objects contained in a broadcast image by selecting the kind of interactive function for detailed specification of the object after activating the pointing device of the portable terminal to point the desired object.

In another general aspect, a method for displaying information using a portable terminal according to the present invention comprises: (a) inputting user's instruction by pointing a pointing device during a broadcast mode; (b) transmitting to an external provider server time information when a user performs a pointing operation and coordinate information on a position designated by the user; and (c) receiving information corresponding to the user's instruction from the external provider server and then providing the information to the user.

There is yet another advantage in that, when a user wants to obtain information on the object contained in a broadcast image while watching a broadcast, the user can receive the desired information from an external provider server by clearly designating the object using the pointing device.

Further, the inputting of the user's instruction activates the pointing device with respect to a pointing input operation of a user by allowing the user to point an activation icon displayed on an input display part of the pointing device, and then receives in the form of coordinate information a position of the pointing device pointed by the user.

Therefore, the pointing device can be activated by pointing the activation icon displayed on the input display part. There is yet another advantage in that the pointing device is activated only when the user points the activation icon, thereby reducing the power consumption of the portable terminal.

Further, the inputting of the user's instruction further comprises: displaying detailed information on a kind of interactive function by allowing a user to point a function icon displayed on the input display part of the pointing device during the broadcast mode; selecting and inputting the kind of interactive function by allowing the user to point the kind of interactive function; and inputting the user's instruction by allowing the user to point the pointing device.

There is yet another advantage in that the user can appoint a desired object after appointing a scope of the desired object out of a plurality of objects contained in a broadcast image by selecting the interactive function, thereby clearly informing an object of information requested by the user.

Further, the inputting of the user's instruction comprises: displaying detailed information on the kind of interactive function by allowing a user to point the user's instruction on the input display part of the pointing device activated with respect to a pointing operation of the user during the broadcast mode; selecting and inputting the kind of interactive function by allowing the user to point the kind of interactive function; and inputting the user's instruction by allowing the user to point the pointing device.

Therefore, the control part allows a user to point a desired object by activating the pointing device of the portable terminal and to specify the object by selecting the kind of interactive function, whereby the user can directly specify the various objects contained in a broadcast image.

According to the portable terminal and the method of displaying information using the same according to the present invention, there is an advantage in that the external provider server can individually provide information requested by a user, thereby increasing user's convenience.

### BRIEF DESCRIPTION OF THE DRAWINGS

FIG. 1 is a block diagram illustrating a portable terminal according to an embodiment of the present invention.
FIG 2 is a front perspective view illustrating the portable terminal according to an embodiment of the present invention.
FIG. 3 is a rear perspective view illustrating the portable terminal according to the embodiment of the present invention.
FIG. 4 is a schematic view illustrating a structure of a touch screen according to the present invention.
FIG. 5 is a schematic view illustrating a principle of detecting a proximity distance of an object using the touch screen of FIG. 4.
FIG. 6 is a schematic view illustrating a principle of detecting a position of an object using the touch screen of FIG. 4.
FIG. 7 is a block diagram illustrating a portable terminal which can provide information in response to user's instruction according to the present invention.
FIG.8 is a schematic view illustrating a transmitting and receiving process between a portable terminal and an external provider server.
FIG.9 is a schematic view illustrating a display state of a display part through which a user inputs user's instruction by selecting a kind of interactive function and receives information.
FIG. 10 is a schematic view illustrating an information providing process using a portable terminal which includes selecting of the interactive function according to an embodiment of the present invention.
FIG. 11 is a block diagram illustrating a portable terminal which can provide information through a conventional interactive function.

### DETAILED DESCRIPTION

In this application, a touch screen is described as one of the most convenient pointing device for a portable terminal, but other pointing device like a track ball may be also used, and a 'touch' operation in the touch screen is one of 'pointing' operations in the typical pointing device.

The portable terminal is wirelessly connected with a computer constructed with a wireless communication network of a communication service provider, and it can be connected through the wireless communication network to an Internet service provider server that provides various Internet services like a blog.

The portable terminal described in this application includes a cellular phone, a smart phone, a notebook computer, a DMB (Digital Multimedia Broadcasting) terminal, a PDA (Personal Digital Assistants), a PMP (Personal Multimedia Player), a navigation system and the like.

Now, exemplary implementations of the present inventive disclosure will be described in detail with reference to the accompanying drawings.

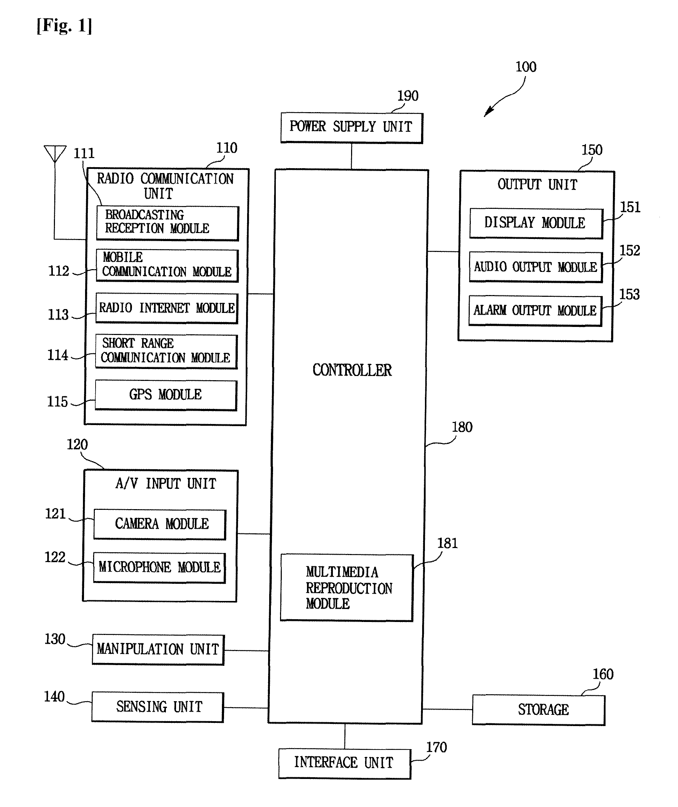

Referring to FIG. 1, construction elements of a portable terminal of the present invention will be described by functions.

FIG. 1 is a block diagram illustrating a portable terminal according to an embodiment of the present invention.

The portable terminal 100 may include a wireless communication part 110, an A/V (Audio/Video) input part 120, a manipulation part 130, a sensing part 140, an output part 150, a storage part 160, an interface part 170, a control part 180 and a power supply part 190. When the construction elements are actually applied in the portable terminal 100, if necessary, two or more elements may be combined into one element, or one element may be divided into two or more elements.

Hereinafter, the construction elements will be described in turn.

The wireless communication part 110 may include a broadcast signal receiving module 111, a mobile communication module 112, a wireless Internet module 113, a local area communication module 114 and a GPS (Global Position System) module 115.

The broadcast signal receiving module 111 receives a broadcast signal and/or information relevant to a broadcast from an external broadcast management server (not shown) through a broadcast channel. The broadcast channel may include a satellite broadcast channel and a terrestrial broadcast channel. The broadcast management server may be a server that generates and transmits a broadcast signal and/or information relevant to a broadcast, or a server that receives already generated broadcast signal and/or information relevant to a broadcast and then transmits them to a terminal. The information relevant to a broadcast may be information including a broadcast channel, a broadcast program and a broadcast service provider. The broadcast signal may include a TV broadcast signal, a radio broadcast signal, a data broadcast signal and a broadcast signal in which the data broadcast signal is combined with the TV broadcast signal or the radio broadcast signal.

Meanwhile, the information relevant to a broadcast can be provided through a mobile communication network. In this case, the information relevant to a broadcast can be received through the mobile communication module 112.

The information relevant to a broadcast can be provided in various types, for example, EPG (Electronic Program Guide) of DMB (Digital Multimedia Broadcasting) or ESG (Electronic Service Guide) of DVB-H (Digital Video Broadcasting-Handheld).

The broadcast signal receiving module 111 receives the broadcast signal using various broadcasting system, particularly, can receive a digital broadcast signal using a digital broadcasting system such as DMB-T (Digital Multimedia Broadcasting-Terrestrial), DMB-S (Digital Multimedia Broadcasting-Satellite), MdeiaFLO (Media Forward Link Only), DVB-H (Digital Video Broadcast-Handheld) and ISDB-T (Integrated Services Digital Broadcast-Terrestrial). Of course, the broadcast signal receiving module 111 can be applied to all broadcasting systems that provide a broadcast signal, as well as the digital broadcasting systems.

A broadcast signal and/or information relevant to a broadcast received through the broadcast signal receiving module 111 can be stored in the storage part 160.

Further, the mobile communication module 112 receives and transmits a wireless signal from/to at least one of a base station, an external terminal and a server on a mobile communication network. The wireless signal can include an audio signal, an image communication call signal, and various data for receiving and transmitting a character/multimedia message.

The wireless Internet module 113 is a module for wireless Internet connection, and it can be provided inside or outside the portable terminal.

The local area communication module 114 is a module for local area communication using a local area communication technology such as Bluetooth, RFID (Radio Frequency Identification), IrDA (Infrared Data Association) UWB (Ultra Wideband), and ZigBee.

The GPS module 115 receives navigation information from a plurality of artificial satellites.

Meanwhile, the A/V input part 120 is to input an audio signal or a video signal, and it can include a camera module 121 and a microphone module 122. The cameral module 121 processes an image frame of a still image and a moving image obtained from an image sensor in an image communication mode or a picture taking mode. And the processed image frame can be displayed on a display module 151.

The image frame processed in the camera module 121 can be stored in the storage part 160 or transmitted to the outside through the wireless communication part 110. Two or more camera modules 121 may be provided according to a construction type of the terminal.

The microphone module 122 receives an audio signal from the outside through a microphone in a communication mode, a record mode, a voice recognition mode and the like and processes the audio signal into electrical audio data. In case of the communication mode, the processed audio data can be converted into other types that can be transmitted to a mobile communication base station through the mobile communication module 112, and then outputted. The microphone module 122 can have various noise removing algorithms for removing noise generated while receiving an audio signal from the outside.

The manipulation part 130 generates key-input data that is inputted by a user in order to control an operation of the terminal. The manipulation part 130 includes a key pad, a dome switch, a touch pad (static pressure type/electrostatic type), a jog wheel, a jog switch and the like. Particularly, if the touch pad is layered on a display module 151 to be described below, this can be called a touch screen.

The sensing part 140 senses a present state of the portable terminal 100, e.g., an opening/closing state of the portable terminal 100, a position of the portable terminal 100, a state whether the user is in contact with the portable terminal 100 and the like, and then generates a sensing signal for controlling an operation of the portable terminal 100. For example, in case of a slide type portable terminal, it is possible to sense whether the slide type portable terminal is opened or closed. Further, the sensing part 140 can sense whether the power supply part 190 supplies power, whether the interface part 170 is connected with an external unit and the like.

The interface part 170 functions to interface between the portable terminal 100 and all external units connected with the portable terminal 100. For example, the interface part 170 may include a wire/wireless headset port, an external charger port, a wire/wireless data port, a card socket (e.g., a memory card, a SIM/UIM card), an audio I/O (Input/Output) terminal, a video I/O (Input/Output) terminal, an earphone port and the like. As described above, the interface part 170 functions to receive data or power from the external units and transmit it to each construction element in the portable terminal 100, or transmit data from the portable terminal 100 to the external units.

The output part 150 is to output an audio signal, a video signal or an alarm signal. The output part 150 can include a display module 151, an audio output module 152, an alarm output module 153 and so on.

The display module 151 displays information processed in the portable terminal 100. For example, in case that the portable terminal 100 is in the communication mode, the display module 151 displays UI (User Interface) or GUI (Graphic User Interface) related to the communication. And in case that the portable terminal 100 is in the image communication mode or the picture taking mode, the display module 151 displays a taken and/or received image, UI or GUI.

Meanwhile, as described above, in case that the touch pad and the display module 151 are formed into a layered structure as the touch screen, the display module 151 can function as an input unit as well as an output unit. The display module 151 can include at least one of a liquid crystal display, a thin film transistor-liquid crystal display, an organic light-emitting diode, a flexible display and a 3D display. Two or more display modules 151 may be provided according to a construction type of the portable terminal 100. For example, the portable terminal 100 may have an external display module (not shown) and an internal display module (not shown) at the same time.

The audio output module 152 outputs audio data received from the wireless communication part 110 in a call signal receiving mode, a communication mode, a recording mode, a voice recognition mode or a broadcast signal receiving mode, or stored in the storage part 160. Further, the audio output module 152 outputs an audio signal (e.g., a call signal receipt melody, a message receipt melody and the like) related to functions performed in the portable terminal 100, and it can include a speaker, a buzzer and so on.

The alarm output module 153 outputs a signal for informing generation of an event in the portable terminal 100. For example, the event generated in the portable terminal 100 includes a call signal receipt requesting a phone call, a message receipt, a key signal input, an alarm for informing a predetermined time and the like. The alarm output module 153 can output other type of signal for informing the generation of the event in the portable terminal 100, which is different from the audio signal or the video signal. For example, the other type of signal may be vibration. In case of receiving a call signal or a message, the alarm output module 153 can output the vibration to inform this event. Or in case that a key signal is inputted, the output module 153 can output the vibration as a feedback signal to the inputting of the key signal. The user can recognize the generation of the event through the output of the vibration. Of course, the signal for informing the generation of the event can be outputted through the display module 151 or the audio output module 152.

The storage part 160 can store a program for processing and controlling the control part 180, and also function to temporarily store input/output data (e.g., a phonebook, a message, a still image, a moving image and the like).

The storage part 160 can include at least one type of storage medium selected from a flash memory type memory, a hard disk type memory, a multimedia card micro type memory, a card type memory (e.g., SD or XD memory), RAM and ROM. Further, the portable terminal 100 can manage a web storage for performing a storing function of the storage part 150 on the Internet.

The control part 180 generally controls whole operations of the portable terminal 100. For example, the control part 180 performs controlling and processing related to the voice communication, the data communication, the image communication and the like. Furthermore, the control part 180 can have a multimedia reproduction module 181 for reproducing multimedia data. The multimedia reproduction module 181 can be provided in the form of a hardware in the control part 180, or provided in the form of a software which is separate from the control part 180.
Moreover, the control part 180 can recognize a proximity touch motion or a direct touch motion of an object (e.g., a user's finger) and change a size or a scope of an image displayed on the touch screen. To this end, the control part 180 can form a scroll bar or a mini-map on the touch screen to control the size and scope of the image displayed on the touch screen. Detailed functions of the control part 180 will be fully described below.

The power supply part 190 receives power from an external or internal power source by controlling of the control part 180 and then supplies the power to each construction element.

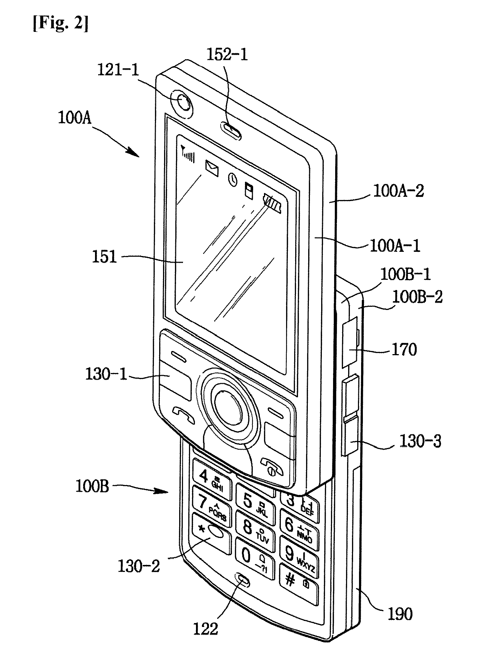

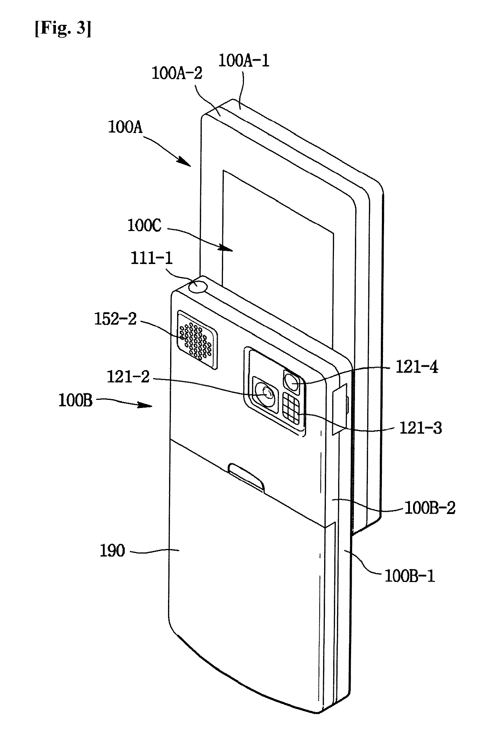

Until now, the portable terminal of the present invention is described in view of the construction elements by functions. Hereinafter, further referring to FIGS. 2 and 3, the portable terminal of the present invention will be described in view of the construction elements by shapes. For convenience of description, a touch screen type portable terminal will be described among various types such as a folder type, a bar type and a slide type. Therefore, the present invention is not limited to the touch screen type portable terminal, but can be applied to the above-mentioned various types of portable terminals.

FIG. 2 is a front perspective view illustrating the portable terminal according to an embodiment of the present invention.

The portable terminal 100 of the present invention includes a first body 100A and a second body 100B which is disposed at the first body 100A to be slid in at least one direction.

A state that the first and second bodies 100A and 100B are overlapped with each other can be called a closed configuration, and a state that at least a part of the second body 100B is exposed by the first body 100A can be called an open configuration.

In the closed configuration, the portable terminal 100 is mainly operated in a standby mode, but the standby mode can be canceled by an operation of a user. And in the open configuration, the portable terminal 100 is mainly operated in a communication mode, but the communication mode can be converted into the standby mode by an operation of the user or after elapse of predetermined time.

A case (casing, housing, cover, etc.) forming an external shape of the first body 100A includes a first front case 100A-1 and a first rear case 100A-2. Various electronic parts are installed in a space defined by the first front case 100A-1 and the first rear case 100A-2. At least one middle case may be additionally disposed between the first front case 100A-1 and the first rear case 100A-2.

The cases can be formed by injection molding of synthetic resin, or formed of a metallic material such as stainless still (STS) and titanium (Ti).

A display module 151, a first audio output module 152-1, a first camera module 121-1 or a first manipulation part 130-1 can be disposed at the first body 100A, specifically, the first front case 100A-1.

The display module 151 includes LCD (Liquid Crystal Display), OLED (Organic Light Emitting Diodes), etc., which visually display information.

Further, a touch pad may be layered on the display module 151, and thus the display module 151 can be operated as a touch screen so that information can be inputted by a touch motion of a user.

The first audio output module 152-1 can be provided in the form of a receiver or a speaker.

The first camera module 121-1 can be properly formed so that the user can take an image or a moving image.

Like in the first body 100A, a case forming an external shape of the second body 100B includes a second front case 100B-1 and a second rear case 100B-2.

A second manipulation part 130-2 can be disposed at a front face of the second body 100B, specifically, the second front case 100B-1.

A third manipulation part 130-3, a microphone module 122 and an interface part 170 can be disposed in at least one of the second front case 100B-1 and the second rear case 100B-2.

The first to third manipulation parts 130-1, 130-2 and 130-3 can be commonly called a manipulation part 130, and if the manipulation part 130 can be operated in a tactile manner that a tactile impression can be given to a user during an operation thereof, it can employ any manner.

For example, the manipulation part 130 may be provided in the form of a dome switch or a touch pad in which instruction or information can be inputted by a push or touch operation of a user, or provided in a wheel or jog type that rotates a key or a joystick type.

In view of a function, the first manipulation part 130-1 is to input an instruction such as start, end and scroll, and the second manipulation part 130-2 is to input numbers, characters, symbols and the like.

And the third manipulation part 130-3 can be served as a hot-key for activating a special function of the portable terminal.

The microphone module 122 can be provided in a proper type that can receive voice of a user or other sounds.

The interface part 170 is served as a passage through which the portable terminal 100 of the present invention can exchange data with external units. For example, the interface part 170 may be at least one of a wire/wireless earphone connection port, a wire/wireless local area communication port (e.g., an IrDA port, a Bluetooth port, a wireless LAN port, etc.), and a power supply terminal for supplying power to each construction element in the portable terminal 100.

The interface part 170 may be a card socket for receiving an external card like a memory card for storing information, SIM (Subscriber Identification Module), UIM (User Identity module) and the like.

The power supply part 190 for supplying power to the portable terminal 100 is disposed at the second rear case 100B-2.

For example, the power supply part 190 may be a rechargeable battery which can be removably coupled to the portable terminal 100.

FIG. 3 is a rear perspective view of the portable terminal of FIG. 2.

Referring to FIG. 3, a second cameral module 121-2 can be additionally provided at a rear face of the second rear case 100B-2 of the second body 100B. The second camera module 121-2 has a picture-taking direction which is substantially opposed to the picture-taking direction of the first camera module 121-1 (referring to FIG. 1), and also the second camera module 121-2 can have a different pixel density from the first camera module 121-1.

For example, the first camera module 121-1 has a low pixel density so as to take a picture of a user's face in an image communication mode and the like and then smoothly transmit the taken image to a counterpart caller. Meanwhile, when a user takes a picture of a general object, the taken picture is not typically transmitted at once, and thus it is preferable that the second camera module 121-2 has a high pixel density.

A flash 121-3 and a mirror 121-4 can be additionally provided to be adjacent to the second camera module 121-2. When the second camera module 121-2 takes a picture of an object, the flash 121-3 throws light on the object. When a user wants to take his/her own picture using the second camera module 121-2, the user can look at himself/herself in the mirror 121-4.

A second audio output module 152-2 can be additionally disposed at the second rear case 100B-2.

The second audio output module 152-2 can realize a stereo function along with the first audio output module 152-1 (referring to FIG. 2), and also can be used for communication in a speakerphone mode.

Besides an antenna for communication and the like, a broadcast signal receiving antenna 111-1 can be disposed at one side of the second rear case 100B-2, and the broadcast signal receiving antenna 111-1 can be provided to be drawn out from the second body 1008.
One part of a slide module 100C for slidably coupling the first body 100A and the second body B is disposed at the first rear case 100A-2 of the first body 100A.

The other part of the slide module 100C is disposed at the second front case 100B-1 of the second body 100B so as not to be exposed to the outside, as described in drawing.

In the above description, the second camera module 121-2 and other elements are disposed at the second body 100B, but the present invention is not limited to this.

For example, at least one or more elements among the broadcast signal receiving antenna 111-1, the second camera module 121-2, the flash 121-3 and the second audio output module 152-2 which are disposed at the second rear case 100B-2 may be disposed at the first body 100A, mainly, the first rear case 100A-2. In this case, there is an advantage that the elements disposed at the first rear case 100A-2 can be protected by the second body 100B in the closed configuration. Furthermore, even though the second camera module 121-2 is not provided separately, the first camera module 121-1 is formed to be rotatable to a picture-taking direction of the second camera module 121-2, thereby taking a picture in the picture-taking direction of the second camera module 121-2.

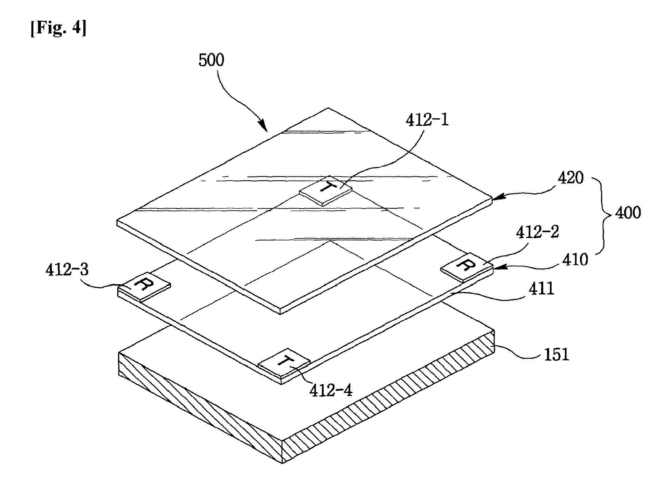

As shown in FIG. 4, a touch pad 400 is layered on the display module 151 of the present invention, thereby forming a touch screen 500.

The touch pad 400 shown in FIG. 4 includes a tetragonal conductive film 411 formed of a transparent conductive material like ITO (Indium Tin Oxide) and metal electrodes 412-1 to 412-4 that are formed at each corner portion of the conductive film 411. A passivation film 420 can be provided on the conductive film 411.

The touch pad 400 is a capacitive sensing type position detecting device in which electric field lines are formed between transmitter metal electrodes (T) 412-1 and 412-4 and receiver metal electrodes (R) 412-2 and 412-3 by AC voltage applied to the transmitter metal electrodes (T) 412-1 and 412-4. The electric field lines are extended to an outside of the touch pad 400 through the passivation film 420. Therefore, if an object (e.g., a user's finger) approaches or directly touches the touch pad 400, a part of the electric field lines are cut off and thus intensity and phase of current flowing to the receiver metal electrodes (R) 412-2 and 412-3 are changed. This is caused by that, since a human body has a capacitance of a few pF with respect to the ground, if the user's finger approaches or directly touches the touch pad 400, the electric field lines formed on the touch pad 400 are distorted.

Processors (not shown) provided in the portable terminal 100 can detect a proximity distance of the object and a position touched by the object using the change of current at the receiver metal electrodes (R) 412-2 and 412-3 due to a touch motion of the object.

In addition, the object includes all other physical solids which can distort the electric field lines formed on the touch pad 400 so that the portable terminal 100 can recognize a touch input.

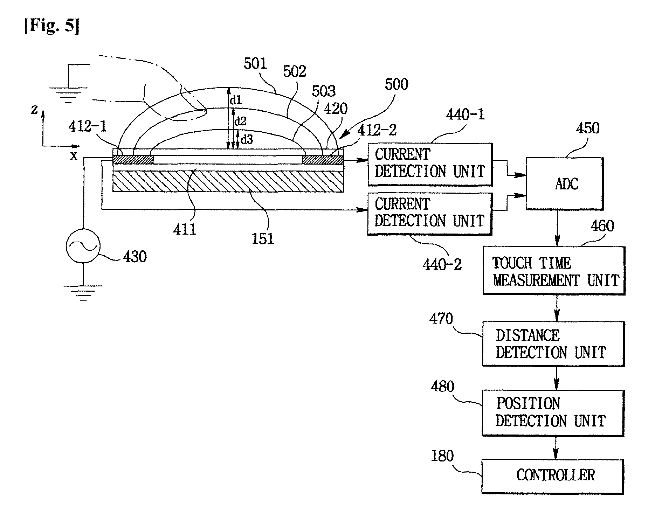

FIG.5 is a schematic view illustrating a principle of detecting a proximity distance of an object using the touch screen of FIG. 4.

As shown in FIG. 5, the electric field lines 501 to 503 are formed between the transmitter metal electrode 412-1 and the receiver metal electrode 412-2 by applying AC voltage 430 to the transmitter metal electrode 412-1 among the metal electrodes 412-1 to 412-4 formed on the transparent conductive film 411. The electric field lines 501 to 503 are formed to be extended in a vertical direction (i.e., z-direction) of the touch screen 500.

A density of the electric field lines 501 to 503 cut off by the user's finger 510 is changed corresponding to the proximity distance between the user's finger 510 and the touch screen 500. In other words, as the user's finger 510 approaches the touch screen 500, an influence exerted on the electric field lines 501 to 503 by the user's finger 510 is increased.

The influence exerted on the electric field lines 501 to 503 by the user's finger 510 changes the current applied to a current detection part 440-1, 440-2 connected to each metal electrode 412-1, 412-2. The current detection part 440-1, 440-2 detects the change of the current and transmits it to an analog-digital converter 450. Then, the analog-digital converter 450 converts an analog value of the current change into a digital value and then transmits it to a touch time measurement part 460.

Then, the touch time measurement part 460 measures time that the finger 510 stays within an effective distance (i.e., 'dl' in FIG. 5), in which the touch screen 500 can recognize approaching of the finger 510, using information on the current change provided from the analog-digital converter 450. Therefore, if the finger 510 has stayed over a predetermined time period (e.g., 1second) within the effective distance (i.e., 'dl' in FIG. 5), the touch time measurement part 460 perceives that the finger 510 performs a proximity touch motion or a direct touch motion according to the present invention. On the other hand, if the finger 510 has not stayed over a predetermined time period (e.g., 1second) within the effective distance (i.e., 'd1' in FIG. 5), the touch time measurement part 460 perceives that the finger 510 does not perform the proximity touch motion or the direct touch motion according to the present invention.

As described above, if it is determined by the touch time measurement part 460 that the touch input is performed by the proximity touch motion or the direct touch motion of the finger 510 with respect to the touch screen 500, the touch time measurement part 460 provides information on generation of the touch input and the current change to a distance detection part 470.

The distance detection part 470 calculates a distance between the finger 510 and the touch screen 500, i.e., a distance that the finger 510 is spaced apart from the touch screen 500 in the vertical direction (i.e., z-direction) using information on the current change.

Specifically, if the finger 510 is located at a position that is nearer than a distance d1 (e.g., 30mm) in the vertical direction (i.e., z-direction) of the touch pad 400 but farther than a distance d2 (e.g., 20mm) (i.e., located between d1 and d2), the distance detection part 470 determines that the finger 510 is located within the effective distance in which the touch screen 500 starts to detect the touch motion of an external object, and then provides a function corresponding to the proximity touch motion according to the present invention. Herein, the proximity touch motion means a state that the object (e.g., the user's finger) is located within the effective distance of the touch screen 500 in order to input a user's instruction. The proximity touch motion in which the object does not directly contact with the touch screen 500 is discriminated from the direct touch motion in which the object directly contacts the touch screen 500.

Further, if the finger 510 is located at a position that is nearer than the distance d2 (e.g., 20mm) in the vertical direction (i.e., z-direction) of the touch screen 500 but farther than a distance d3 (e.g., 10mm) (i.e., located between d2 and d3), the distance detection part 470 determines that the finger 510 is in close proximity to the touch screen 500.

Furthermore, if the finger 510 is located at a position that is nearer than the distance d3 (e.g., 10mm) in the vertical direction (i.e., z-direction) of the touch screen 500 (i.e., located within d3), or the finger 510 directly contacts a surface of the touch screen 500, the distance detection part 470 determines that the finger 510 directly contacts the touch screen 500 within an error range.

In FIG. 5, the touch motion of the finger 510 is described in a state that the distance between the finger 510 and the touch screen 500 is divided into three steps. However, the distance may be more precisely divided into four steps or more.

Next, from the information on the current change, a position detection part 480 calculates a position on the touch screen 500 designated by the finger 510, i.e., horizontal coordinates in x and y-directions on the touch screen 500. The y-direction is a direction perpendicular to the x and z-directions in FIG. 5.

The vertical distance between the finger 510 and the touch screen 500 and the horizontal coordinates of the finger 510 located on the touch pad 400, as described above, are provided to a control part 180. And the control part 180 determines the user's instruction using the vertical distance and the horizontal coordinates, performs a control operation corresponding to the user's instruction and also provides a desired GUI (Graphic User Interface) on the display module 151.

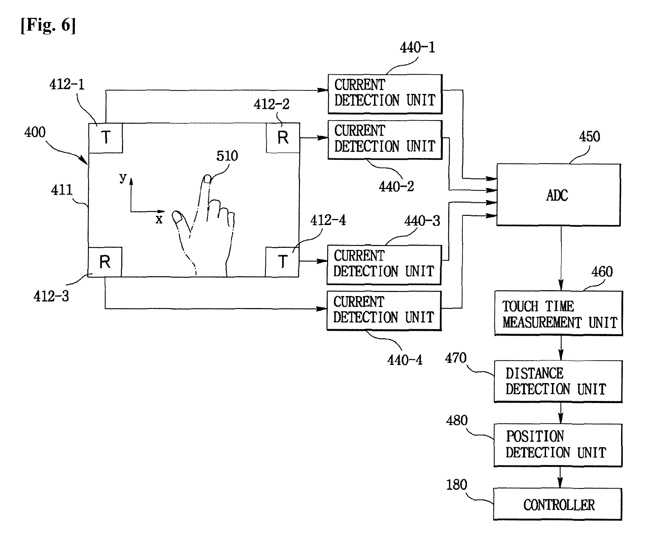

FIG. 6 is a schematic view illustrating a principle of detecting a position of an input medium using the touch screen of FIG. 4.

As shown in FIG. 6, if AC voltage is applied to the transmitter metal electrodes (T) 412-1 and 412-4 of the touch pad 400, the electric field lines (not shown) are formed between the transmitter metal electrodes (T) 412-1 and 412-4 and the receiver metal electrodes (R) 412-2 and 412-3.

If the user's finger 510 approaches the touch pad 400, or directly contacts the touch pad 400, current change occurs at the metal electrodes 412-1 to 412-4. The current detection parts 440-1 to 440-4 measure the current change, and the position detection part 470 calculates the horizontal coordinates of the finger 510 located on the touch pad 400 using the current change, as described above, and then provides to the control part 180. Thus the control part 180 recognizes the horizontal coordinates on the touch screen 500 contacted by the finger 510, performs a user's instruction corresponding to the touch motion and also provides a desired GUI (Graphic User Interface) on the display module 151.

In FIGS. 5 and 6, the touch time measurement part 460, the distance detection part 470 and the position detection part 480 are separately illustrated by functions, but they may be disposed in the control part 180.

Referring to FIGS. 4 to 6, the principle of determining whether the input medium performs the proximity touch motion or the direct touch motion with respect to the touch screen 500 is described using the touch screen 500, for example, having the capacitive sensing type touch pad 400. However, if it is possible to provide the function of detecting the distance between the input medium and the touch screen 500 and the position designated by the input medium, a kind of touch pad 400 and an arrangement configuration of the metal electrodes 412-1 to 412-4 formed on the touch pad 400 are not limited.

For example, the touch pad 400 can be realized to detect the proximity position between the input medium and the touch pad 400 by using an optical sensor having a laser diode and a light emitting diode, a high frequency oscillation proximity sensor and a magnetic proximity sensor. Alternatively, the touch pad 40 can be realized by forming a metal electrode on an upper or lower plate and combining a capacitive sensing type and a resistive sensing type which detects change of voltage according to a position pressed by an input medium.

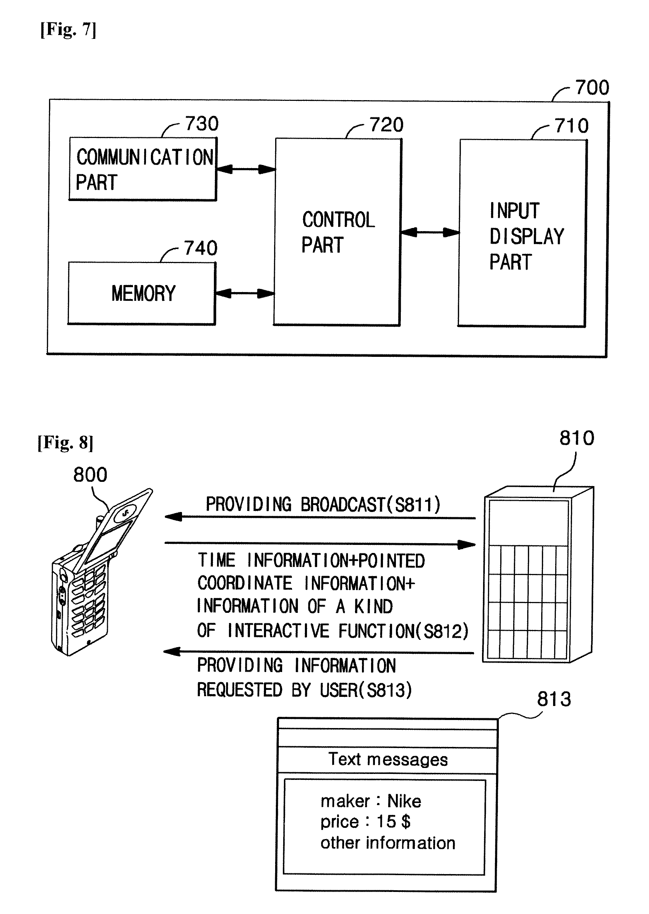

FIG.7 is a block diagram illustrating a portable terminal related to an embodiment of the present invention.

Referring to FIG. 7, a portable terminal 700 of the present invention includes an input display part 710, a control part 720, a communication part 730 and a memory 740.

The input display part 710 is disposed at a front face of the portable terminal 700 so as to receive a user's instruction and provide information requested by the user. The input display part 710 includes a pointing device so that a user can input the user's instruction by pointing a desired object. A touch screen as an example of the pointing device is generally used in the portable terminal, and the input display part 710 includes the pointing device. When a user wants to receive information on a particular object while seeing a broadcast, the user can clearly specify the object by pointing it. In order to reduce power consumption in the portable terminal 700, the input display part 710 activates the pointing device only when receiving a user's instruction. The method of activating the pointing device can includes a pointing method of an unspecific portion of an entire surface of the pointing device and a pointing method of an activation icon displayed at the input display part. In other words, the user can activate the deactivated input display part 710 through the activation icon and then point a desired object. Further, in order to reduce the power consumption in the portable terminal 700 and prevent an undesired function from being performed by erroneous pointing, the input display part 710 can be deactivated again.

If a user's instruction are inputted to the portable terminal 700, the control part 720 requests information corresponding to the user's instruction from an external provider server and then provides the information to the user. In order to clearly specify a desired object, the control part 720 receives coordinate information on a position on the input display part 710 designated by the user. And in order to specify a scope of the object contained in a broadcast image when the user performs a pointing operation, the kind of interactive function selected by the user is stored. The control part 720 transmits to an external provider server the pointed coordinate information, the information on the kind of interactive function and the time information when the user performs the pointing operation, thereby requesting information on the clearly specified object. In case of a live broadcast that is received in real-time, the time information is time when the user performs the pointing operation, and in case of a recorded broadcast, the time information is reproduction time from a point of time when a first broadcast is started to a point of time when the user performs the pointing operation. The control part 720 can receive the requested information in the form of a character message from the external provider server. The character message is in the form of SMS or MMS including a text, an image, an icon, a moving image, an animation and the like.

The user has to specify and select one of a plurality of objects contained in a broadcast image, and the interactive function can be used to clearly receive the user's instruction. The interactive function is to provide an interactive broadcasting service. For example, if an external provider inserts a popularity voting function for actors or actresses appeared in a movie, the user can use the interactive function by selecting and inputting his/her favorite actor or actress through the portable terminal while seeing the movie through the portable terminal. Furthermore, if the external provider inserts information on particular goods appeared in a broadcast program, the user can additionally receive the information on the particular goods by selecting the interactive function.

The information on the kind of interactive function is previously stored in the portable terminal 700, and the kind of interactive function can include every sphere such as person, goods, background information and the like appeared in the broadcast image, which can be clearly specified by a user's instruction. The user can receive detailed information on the kind of interactive function by pointing a function icon displayed on the input display part 710 of the portable terminal 700. The detailed information on the kind of interactive function can be displayed on the input display part 710 while the broadcast is stopped by the user' instruction. Alternatively, the detailed information on the kind of interactive function can be semitransparently displayed on the input display part 710 while the broadcast is continuously reproduced.
The communication part 730 functions to form a communication channel so that the portable terminal 700 can communicate with the external provider server. The portable terminal 700 transmits to the external provider server through the communication part 730 the time information when the user performs the pointing operation, the coordinate information on the position designated by the user and the information on the interactive function selected by the user as informations by which the user can specify the desired object. The external provider server transmits information requested by the user to the portable terminal 700 through the communication part 730. The information transmitted from the external provider server to the portable terminal 700 may be in the form of the character message. The character message is in the form of SMS or MMS including a text, an image, an icon, a moving image, an animation and the like. Communication between the portable terminal 700 and the external provider server may use a personal communication service according to a W-CDMA system based on GSM (Global System for Mobile communication). The communication part 730 includes a broadcasting receiver and a wireless transmitter/receiver. The broadcasting receiver decodes and outputs a broadcast signal received from the external provider server, and the wireless transmitter/receiver transmits and receives signal to/from the external provider server through mobile communication network.

The memory 740 stores various information for driving various functions provided in the portable terminal 700. Further, the memory 740 previously stores the kind of interactive function and then allows the kind of interactive function to be displayed on the input display part 710 by controlling of the control part 730 when a user wants to select the interactive function. The kind of interactive function may include all scopes such as person, goods, background information and the like that appear in the broadcast image, which can be clearly specified by a user's instruction.

Hereinafter, the construction of the portable terminal 700 shown in FIG. 7 will be compared with that in FIG. 1.

The input display part 710 of FIG. 7 is a device that functions to input information for controlling an operation of the portable terminal 700 and output information processed in the portable terminal 700. Therefore, the input display part 710 of FIG. 7 may correspond to a combination of the manipulation part 130 and the output part 150 of the portable terminal 100 of FIG. 1.
The control part 720 of FIG. 7 is a device that typically controls an entire operation of the portable terminal 700, and it can be corresponded to the control part 180 of the portable terminal 100 of FIG. 1.

The communication part 730 of FIG. 7 is a device that transmits and receives a signal in the portable terminal 700, and it can be corresponded to the wireless communication part 110 of the portable terminal 100 of FIG 1.

The memory 740 of FIG. 7 is a device that stores various informations that drive the functions provided in the portable terminal 700, and it can be corresponded to the storage part 160 of the portable terminal 100 of FIG 1.

Hereinafter, a method of providing information using the portable terminal 700 according to the present invention will be described.

An information providing method including the interactive function according to one embodiment of the present invention is as follows.

In order to receive detailed information on the kind of interactive function, a user points a function icon displayed on the input display part 710. If the function icon is selected, the detailed information on the kind of interactive function that are previously stored in the memory 740 of the portable terminal 700 is displayed on the input display part 710. The detailed information on the kind of interactive function can generally include goods information, personal information, background information and so on, and the user can select desired information and clearly input a user's instruction. If the user inputs the user's instruction by pointing the desired object, the control part 720 receives information on a position pointed by the user in the form of coordinate information. In order to specify information designated by the user and then request the information to the external provider server, the control part 720 transmits information on broadcasting time, coordinate information on the position pointed by the user and information on the kind of interactive function. The external provider server retrieves information requested by the user using the information transmitted from the portable terminal 700, and then transmits the retrieved information in the form of the character message. By these processes, the user can receive the desired information from the external provider server through the portable terminal 700.
Furthermore, the information providing method by activating the pointing device according to another embodiment of the present invention is as follows.

If a user points a desired object on the activated input display part 710 to input a user's instruction by a pointing operation of the user, detailed information on the kind of interactive function that are previously stored in the memory 740 of the portable terminal 700 is displayed on the input display part 710. The detailed information on the kind of interactive function can generally include goods information, personal information, background information and so on, and the user can select the desired information and clearly input the user's instruction. The control part 720 receives information on a position pointed by the user in the form of the coordinate information. In order to specify information designated by the user and then request the information to the external provider server, the control part 720 transmits information on broadcasting time, coordinate information on the position pointed by the user and information on the kind of interactive function. The external provider server retrieves information requested by the user using the information transmitted from the portable terminal 700, and then transmits the retrieved information in the form of the character message. By these processes, the user can receive the desired information from the external provider server through the portable terminal 700.

FIG.8 is a schematic view illustrating a transmitting and receiving process between the portable terminal and the external provider server.

Referring to FIG. 8, in order to provide desired information to a user, information is transmitted and received between the portable terminal 800 and the external provider server 810.

The external provider server 810 provides to the portable terminal 800 various digital broadcasting informations that the user can watch (S811).

While the user watches a broadcast through the portable terminal 800, if there is an object that the user wants to receive information thereof, the user specifies the object and inputs a user's instruction. The portable terminal 800 transmits to the external provider server 810 information which can clearly specify the user's instruction. Pointed coordinate information, time information when a user performs a pointing operation and information on a kind of interactive function selected by the user can be transmitted as the information which can clearly specify the user's instruction (5812).

The external provider server 810 receives detailed information corresponding to the user's instruction from the portable terminal 800, and then transmits information requested by the user. The information requested by the user can be transmitted in the form of the character message to the portable terminal 800 (S813).

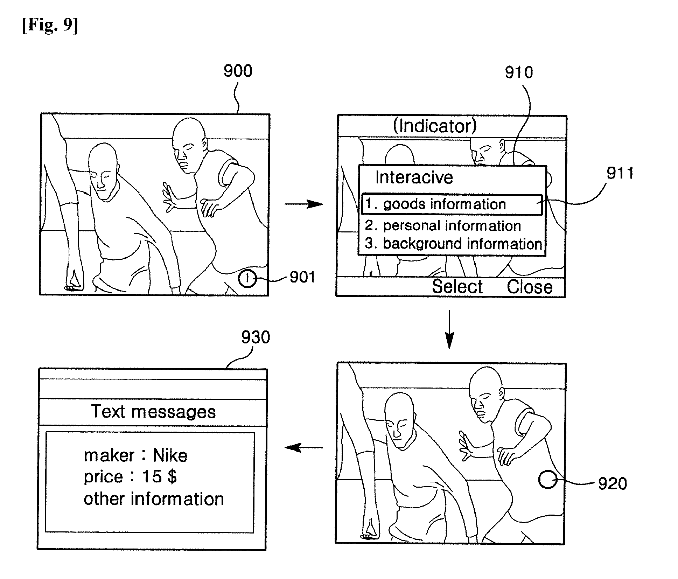

FIG.9 is a schematic view illustrating a display state of a display part through which the user inputs a user's instruction by selecting the kind of interactive function and receives the information.

Referring to FIG. 9, a user can receive detailed information 910 of the kind of interactive function by pointing a function icon 901 displayed on the input display part of the portable terminal 900. The user can receive desired information by selecting the kinds of interactive function and pointing a desired object (920).

The function icon 901 serves to inform a point of time when the user wants to obtain information while watching a broadcast, and also to display detailed information on the kind of interactive function.

The detailed information 910 of the kind of interactive function is to specify the object designated by the user, and it may include goods information, personal information, background information and the like which can be contained in a broadcast image. The detailed information 910 of the kind of interactive function can be displayed in a state that the broadcast is stopped, or can be semitransparently displayed in a state that the broadcast is continuously reproduced.

For example, in case that a user wants to obtain information on a uniform of a soccer player while the user watches a soccer game through the portable terminal 900, the user selects the function icon 901 displayed on the input display part and receives the detailed information 910 of the kind of interactive function. Since the user now wants to obtain information on the uniform of the soccer player, the user can select the kind of interactive function by pointing goods information out of '1. Goods information', '2. Personal information' and '3. Background information'. Then, the user can input a user' instruction by pointing the uniform 920 as the desired object, and receive the information on the uniform in the character message form 930 transmitted from the external provider server.

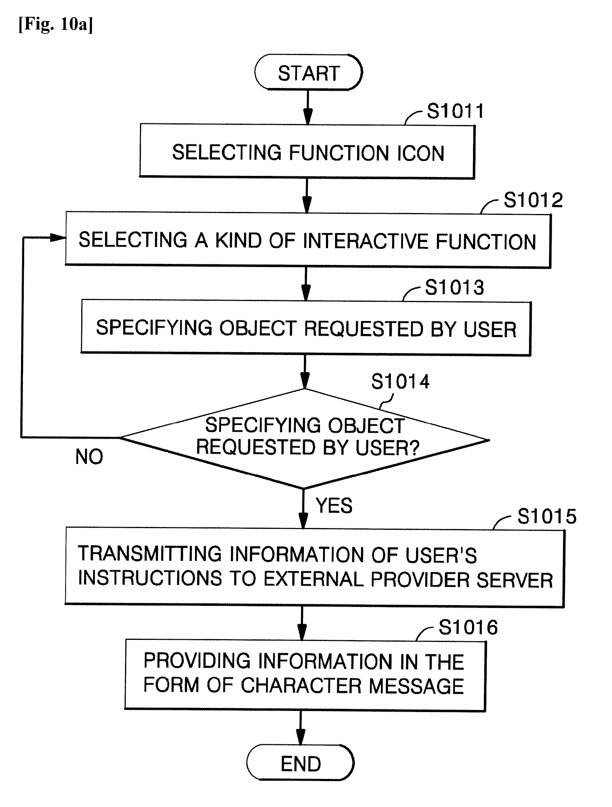

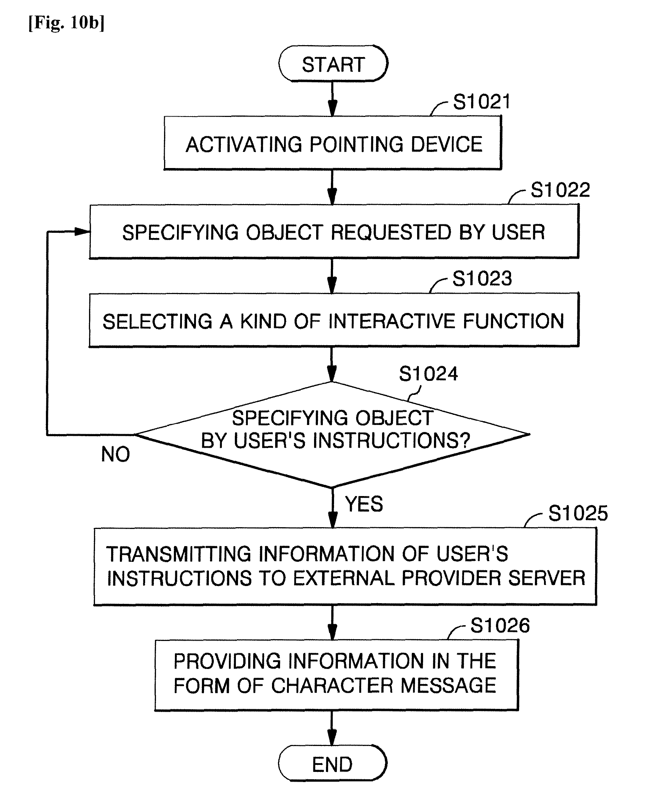

FIG. 10 is a schematic view illustrating information providing processes using the portable terminal according to one embodiment of the present invention.

FIG. 10a is a flow chart illustrating a process of providing desired information by selecting of the kind of interactive function and inputting a user's instruction according to one embodiment of the present invention, and FIG. 10b is a flow chart illustrating a process of providing desired information by activating a pointing device and inputting a user's instruction according to another embodiment of the present invention.

Referring to FIG. 10a, if a user points a function icon, the portable terminal displays detailed information on the kind of interactive function on an input display part (S1011). The user clearly specifies a user's instruction by selecting the kind of interactive function (S 1012). The user inputs the user's instruction by specifying and pointing an object contained in a broadcast image, which the user wants to obtain information thereof (S 1013). If the object designated by the user is specified through these processes (S1014), the portable terminal transmits to the external provider server time information when the user performs a pointing operation, coordinate information on a position designated by the user and information on the kind of interactive function selected by the user (S1015). The external provider server receives the information from the portable terminal and retrieves information requested by the user and then transmits the retrieved information in the form of a character message to the portable terminal (S1016).

Referring to FIG. 10b, if a user points a activation icon, a pointing device in the input display part is activated (S1021). The user inputs a user's instruction by specifying and pointing an object contained in a broadcast image, which the user wants to obtain information thereof (S1022). If the user performs a pointing operation, the portable terminal displays detailed information on the kind of interactive function corresponding to a position pointed by the user (S1023). If the object designated by the user is specified through these processes (S1024), the portable terminal transmits to the external provider server time information when the user performs the pointing operation, coordinate information on a position pointed by the user and information on the kind of interactive function selected by the user (S1025). The external provider server receives the informations from the portable terminal and retrieves the information requested by the user and then transmits the retrieved information in the form of the character message to the portable terminal (S1026).

In a portable terminal in which the pointing operation of the user as described above is outputted in the form of a vibration pattern, the construction and the method of each embodiment can not be applied restrictively, but entire or a part of the embodiments may be combined so as to change or modify the implementations.

While the present novel concept has been described with reference to the particular illustrative implementations, it is not to be restricted by those implementations but only by the appended claims. It is to be appreciated that those skilled in the art can change or modify the implementations without departing from the scope and sprit of the present disclosure.

## Claims

1. A portable terminal, comprising:
an input display part which has a pointing device for inputting user's instruction by a pointing operation of a user during a broadcast mode;
a communication part which forms a communication channel to an external provider server; and
a control part which transmits time information when the user performs the pointing operation and coordinate information on a position pointed by the user to the external provider server if the user's instruction are inputted, and receives information on a pointed object from the external provider server, and then provides the information to the user.

2. The portable terminal of claim 1, wherein the input display part includes an activation icon for activating or deactivating the input display part with respect to a pointing input operation of the user.

3. The portable terminal of claim 1, wherein the control part activates the input display part when the user points an activation icon displayed on the input display part of the portable terminal, which is deactivated with respect to a pointing input operation of the user, and deactivates the input display part when the user points the activation icon on the activated input display part.

4. The portable terminal of claim 1, wherein the control part receives in the form of a character message information corresponding to the user's instruction from the external provider server.

5. The portable terminal of claim 1, further comprising a memory for previously storing a kind of interactive function.

6. The portable terminal of claim 5, wherein the control part transmits to the external provider server reproduction time from a point of time when a first broadcast is started to a point of time when the user performs the pointing operation, coordinate information on a position designated by the user and information on a kind of interactive function selected by the user.

7. The portable terminal of claim 5, wherein the input display part comprises a function icon for displaying the kind of interactive function by user' instruction.

8. The portable terminal of claim 5, wherein the control part displays detailed information on the kind of interactive function by allowing the user to point a function icon displayed on the input display part of the portable terminal.

9. The portable terminal of claim 5, wherein the control part displays detailed information on the kind of interactive function by allowing the user to input the user's instruction on the input display part activated by pointing of the portable terminal.

10. The portable terminal of claim 5, wherein the control part displays detailed information on the kind of interactive function selected by the user while a broadcast is stopped.

11. The portable terminal of claim 5, wherein the control part semitransparently displays detailed information on the kind of interactive function selected by the user while a broadcast is continuously reproduced.

12. A method for displaying information in a portable terminal, comprising:
(a) inputting user's instruction by pointing a pointing device during a broadcast mode;
(b) transmitting to an external provider server time information when a user performs a pointing operation and coordinate information on a position designated by the user; and
(c) receiving information corresponding to the user's instruction from the external provider server and then providing the information to the user.

13. The method of claim 12, wherein the inputting of the user's instruction activates the pointing device with respect to a pointing input operation of a user by allowing the user to point an activation icon displayed on an input display part of the pointing device, and then receives in the form of coordinate information a position of the pointing device pointed by the user.

14. The method of claim 12, wherein the inputting of the user's instruction comprises:
displaying detailed information on the kind of interactive function by allowing the user to point a function icon displayed on the input display part of the pointing device during the broadcast mode;
selecting and inputting the kind of interactive function by allowing the user to point the kind of interactive function; and
inputting the user's instruction by allowing the user to point the pointing device.

15. The method of claim 12, wherein the inputting of the user's instruction comprises:
displaying detailed information on the kind of interactive function by pointing the user's instruction on the input display part of the activated pointing device during the broadcast mode;
selecting and inputting the kind of interactive function by allowing the user to point the kind of interactive function; and
inputting the user's instruction by allowing the user to point the pointing device.
